# EUROPÄISCHE PATENTSCHRIFT

(11) **EP 2 501 453 B1**
(45) Veröffentlichungstag und Bekanntmachung des Hinweises auf die Patenterteilung: **08.01.2014**
(21) Anmeldenummer: 10793129.7
(22) Anmeldetag: 02.11.2010
(51) Int. Cl.: B01D 25/00, C10M 169/00, C10M 169/02, C10M 169/04

(54) **VERFAHREN ZUM BETREIBEN EINER FILTERPRESSE UNTER VERWENDUNG EINES NICHT-MINERALISCHEN HYDRAULIK-ÖLS**
METHOD FOR OPERATING A FILTER PRESS USING A NON-MINERAL HYDRAULIC OIL
PROCÉDÉ D'EXPLOITATION DE FILTRE-PRESSE UTILISANT UNE HUILE HYDRAULIQUE NON MINÉRALE

(30) Priorität: 18.11.2009 AT 18222009
(43) Veröffentlichungstag der Anmeldung: 26.09.2012
(73) Patentinhaber: Andritz AG, 8045 Graz (AT)
(72) Erfinder: DENKINGER, Franz, 89614 Öpfingen (DE)
(74) Vertreter: Schweinzer, Friedrich
(86) Internationale Anmeldenummer: PCT/AT2010/000413
(87) Internationale Veröffentlichungsnummer: WO 2011/060461

(56) Entgegenhaltungen:
- EP-A1- 1 939 272
- WO-A1-2006/116502
- US-A1- 2005 059 562

## Beschreibung

Die Erfindung betrifft ein Verfahren zum Auspressen von Palmöl oder Palmkernöl in einer Filterpresse und eine Filterpresse.

Filterpressen dienen dazu, aus einer zu filtrierenden Suspension Feststoffe von der flüssigen Phase abzutrennen. Dieser Filtrationsprozess findet zwischen den Filterplatten statt, wobei mehrere Filterplatten zu einem Filterplattenpaket aneinander gefügt sind. Mit Hilfe eines üblicherweise hydraulischen Schließzylinders, wird Druck auf die Schiebeplatte und das dahinterliegende Filterplattenpaket bis zur feststehenden Kopfplatte ausgeübt, um die erforderliche Dichtheit zwischen den einzelnen Filterplatten sicher zu stellen. Jede der Filterplatten weist eine Filterfläche auf, die mit einem Filtertuch abgedeckt ist, wobei die zu filtrierende Suspension in die zwischen zwei Filterplatten gebildete Filterkammer und gegen das Filtertuch gepresst wird. Das zwischen Filtertuch und Filterfläche befindliche Filtrat wird in weiterer Folge abgeführt, und der Filterkuchen verbleibt in der Filterkammer. Durch Trennung der Filterplatten voneinander fällt der Filterkuchen ab. Für das Auseinanderziehen des Filterplattenpakets wird gemäß dem Stand der Technik auch der Schließzylinder verwendet oder eine reversierende Verschiebevorrichtung, die hydraulisch oder elektrisch angetrieben wird. Um hohen Durchsatz zu erreichen, sind neben kurzen Befüll- und Filtrationszeiten auch kurze Offnungs- und Schließzeiten der Filterplattenpakete zu erreichen. Um kurze Offnungs- und Schließzeiten zu erzielen, werden Hydraulikaggregate für langen und raschen Zylinderhub ausgelegt. Hydraulikaggregate bestehen aus einem Hydraulikantrieb und einem Hydraulikzylinder. Im Hydraulikzylinder befindet sich das Hydrauliköl, welches auf Druck gebracht wird. Je nach geometrischen Bedingungen und dem Druckniveau in der Filterkammer während der Filtration sind vom Hydraulikaggregat mehrere 100 bar aufzubringen, um schließlich Filtrationsdrücke von bis zu 60 bar zu erlauben. Hydrauliköle zeichnen sich generell dadurch aus, dass sie über einen weiten Druckbereich stabil bleiben d.h. sich weder chemisch noch in ihren physikalischen Eigenschaften signifikant oder gar irreversibel verändern, und mit den berührenden Flächen nicht chemisch oder mechanisch interagieren. Es gibt eine Vielzahl mineralischer Hydrauliköle, die diesen Bedingungen genügen. Wenn allerdings Suspensionen filtriert werden, bei denen die Produkte durch mineralische Öle nicht kontaminiert werden dürfen (z.B. Lebensmittel- und Pharmabereich), sind entweder sogenannte "food grade" Mineralöle zu verwenden oder nicht-mineralische Öle, bei denen eine Kontamination der Produkte grundsätzlich zulässig ist. "Food grade" Mineralöle sind dabei häufig nur eingeschränkt zulässig, da eine Produktkontamination lediglich bei definierten Störfällen erlaubt wird. Nicht-mineralische Öle, d.h. Öle auf pflanzlicher Basis, unterscheiden sich in ihrer chemischen Zusammensetzung aber auch in ihren Eigenschaften beim Einsatz als hydraulische Öle. Sie sind gemeinhin lediglich bis zu einem geringeren Druck- und Temperaturniveau stabil einsetzbar. Um diese Öle dennoch für Filterpressen einsetzen zu können, sind die Filterpressen bei geringen Drücken zu betreiben, was einer guten Trennung Fest/Flüssig entgegensteht. Auch die geometrischen Verhältnisse, d.h. Druckzylinderquerschnitt zu Dichtfläche, können so verändert werden, dass auch bei geringeren Hydraulikdrücken die notwendigen Dichtflächenpressungen aufgebracht werden können; derartige Änderungen ziehen jedoch die Nachteile nach sich, dass mehr Hydrauliköl benötigt wird und der Hydraulikzylinder größer und damit teurer wird. Nicht-mineralische Öle wie u.a. Palmöl und Palmkernöl sind bereits zur Verwendung als Schmiermittel in der Lebens- und Futtermittelindustrie z.B. aus der EP 1 939 272 A1, US 2005/059562 A1 oder US 2006/116502 A1 bekannt.

Es ist daher Ziel der Erfindung, obige Nachteile zu vermeiden und ein hydraulisches System für Filterpressen zu entwickeln, welches ohne geometrische Änderungen von Verschlusssystemen, welche für mineralische Hydrauliköle konzipiert werden, auskommt, und bei dem ein rein pflanzlich basiertes Öl, welches bei Anwendungen im Nahrungsmittelbereich keine problematische Kontamination darstellt, als vollwertiger Ersatz von mineralisch basiertem Hydrauliköl verwendet werden kann.

Dieses Ziel wird dadurch erreicht, dass als Hydraulikflüssigkeit in dieser Filterpresse Palmöl oder Palmkernöl eingesetzt wird, wobei das Palmöl oder Palmkernöl im Kreislauf geführt und bei einem Druck größer ca. 150 bar die Temperatur über und im Abstand von der Schmelztemperatur gehalten wird. Dadurch können die Eigenschaften des Hydrauliköls über den gesamten erforderlichen Druckbereich so erhalten werden, dass das Hydraulikaggregat störungsfrei betreibbar bleibt. Das Hydrauliköl kann auch einfach ausgetauscht beziehungsweise bei geringen Leckagen ergänzt werden.

Eine vorteilhafte Weiterbildung der Erfindung ist dadurch gekennzeichnet, dass der Druck ca. 400 bis 450 bar beträgt. Damit können die Pressen besonders effizient betrieben werden.

Eine günstige Ausgestaltung der Erfindung ist dadurch gekennzeichnet, dass die Temperatur des Palmöls oder Palmkernöls zwischen ca. 15 °C und ca. 60°C, vorzugsweise zwischen ca. 25 °C und 50 °C. beträgt, wobei sie für vorteilhafterweise zwischen ca. 30 °C und ca. 45 °C, beispielsweise ca. 35 - 40°C,betragen kann. In diesem Betriebsbereich hat sich das Palmöl oder Palmkernöl bei hohen Drücken als besonders lange stabil erwiesen.

Eine vorteilhafte Weiterbildung des erfindungsgemäßen Verfahrens ist dadurch gekennzeichnet, dass die Temperatur des Palmöls oder Palmkernöls beim Anfahren zwischen ca. 55 °C und ca. 70 °C beträgt. Damit können in einfacher Weise auch etwaige Rückstände in der Anlage nach einem Stillstand günstig entfernt werden.

Eine günstige Ausgestaltung der Erfindung ist dadurch gekennzeichnet, dass das Palmöl oder Palmkernöl eine maximale Verunreinigung durch andere nicht mineralische Öle von 5 Vol% aufweist.

Weiters hat es sich günstig erwiesen, wenn das Palmöl oder Palmkernöl eine maximale Verunreinigung durch mineralische Öle von 0, 5 % des Volumens des Hydrauliksystems aufweist.

Vorteilhaft ist es, wenn die inneren Oberflächen des Ölkreislaufes gegenüber dem Palmöl oder Palmkernöl resistent ausgeführt sind. Dadurch kann die Zersetzung des Öls und der chemische Angriff der Oberflächen weitestgehend vermieden werden. Zugleich kontaminiert das hydraulische Palmöl nicht.

Besonders günstig hat sich erwiesen, wenn das Palmöl oder Palmkernöl auch ohne Zugabe von Additiven verwendet wird. Dadurch ergibt sich eine hohe Kostenersparnis und bessere Stabilität des Öls.

Die Erfindung betrifft auch eine Filterpresse zum Auspressen von Palmöl oder Palmkernöl , die dadurch gekennzeichnet ist, dass ein separater Ölkreislauf für Palmöl oder Palmkernöl als Hydraulikflüssigkeit und im separaten Ölkreislauf ein Wärmetauscher vorgesehen ist.
Günstig ist es, wenn als Druckerzeugungsaggregate mehrere Hochdruckpumpen hintereinander geschaltet werden.

Vorteilhaft ist es auch, wenn die inneren Oberflächen des Ölkreislaufes gegenüber dem Palmöl oder Palmkernöl resistent ausgeführt sind. Dadurch kann die Zersetzung des Öls und der chemische Angriff der Oberflächen weitestgehend vermieden werden.

### Ausführungsbeispiel 1:

Bei einer Filterpresse zur Herstellung von Palmöl wurde ein Hydrauliksystem mit drei Druckerhöhungspumpen in der 1. Stufe auf 60 bar, in der 2. Stufe auf 150 bar und in der 3. Stufe auf 400 bar eingesetzt. Bei Verwendung eines Palmöls mit einer Verschmutzung von ca. 0,04 % wurde der Ölkreislauf mit einer Temperatur von ca. 38 °C betrieben. Das Öl war über mehrere Tage kontinuielichen Betrieb stabil und danach ohne weitere Verunreinigungen.

### Ausführungsbeispiel 2:

Ein nahezu reines Palmöl mit einer Verunreinigung von 0,00005% wurde in der oben beschriebenen Anlage eingesetzt. Die Temperatur betrug ca. 40 °C. Auch hier war das Öl über mehrere Tage stabil und ohne weitere Verunreinigungen.

Palmöl oder Palmkernöl als Hydrauliköl bei Filterpressen können als lebensmittelechte Öle eingesetzt werden. Bei den verwendeten hohen Drücken und Temperaturen besteht weiters eine gute Stabilität des Öls. Beim Einsatz bei Filterpressen zur Erzeugung von Palmöl oder Palmkernöl besteht der zusätzliche Vorteil, dass das Hydrauliköl direkt aus der Produktion entnommen werden kann und somit nicht teuer eingekauft werden muss.

## Patentansprüche

1. Verfahren zum Auspressen von Palmöl oder Palmkernöl in einer Filterpresse, **dadurch gekennzeichnet, dass** als Hydraulikflüssigkeit in dieser Filterpresse Palmöl oder Palmkernöl eingesetzt wird, wobei das Palmöl oder Palmkernöl im Kreislauf geführt und bei einem Druck größer ca. 150 bar und die Temperatur über und im Abstand von der Schmelztemperatur gehalten wird.

2. Verfahren nach Anspruch 1, **dadurch gekennzeichnet, dass** der Druck ca. 400 bis 450 bar beträgt.

3. Verfahren nach Anspruch 1 oder 2, **dadurch gekennzeichnet, dass** die Temperatur des Palmöls oder Palmkernöls zwischen ca. 15 °C und ca. 60°C, vorzugsweise zwischen ca. 25 °C und 50 °C, beträgt.

4. Verfahren nach Anspruch 3, **dadurch gekennzeichnet, dass** die Temperatur des Palmöls oder Palmkernöls zwischen ca. 30 °C und ca. 45 °C, beispielsweise ca. 35 - 40°C, beträgt.

5. Verfahren nach Anspruch 1 oder 2, **dadurch gekennzeichnet, dass** die Temperatur des Palmöls oder Palmkernöls beim Anfahren zwischen ca. 55 °C und ca. 70 °C beträgt.

6. Verfahren nach einem der Ansprüche 1 bis 5, **dadurch gekennzeichnet, dass** das Palmöl oder Palmkernöl eine maximale Verunreinigung durch andere nicht mineralische Öle von 5% aufweist.

7. Verfahren nach einem der Ansprüche 1 bis 5, **dadurch gekennzeichnet, dass** das Palmöl oder Palmkernöl eine maximale Verunreinigung durch mineralische Öle von 0, 5 % aufweist.

8. Verfahren nach einem der Ansprüche 1 bis 7, **dadurch gekennzeichnet, dass** die inneren Oberflächen des Ölkreislaufes gegenüber dem Palmöl oder Palmkernöl resistent ausgeführt sind.

9. Verfahren nach einem der Ansprüche 1 bis 8, **dadurch gekennzeichnet, dass** das Palmöl oder Palmkernöl ohne Zugabe von Additiven verwendet wird.

10. Filterpresse zum Auspressen von Palmöl oder Palmkernöl , **dadurch gekennzeichnet, dass** ein separater ölkreislauf für Palmöl oder Palmkernöl als Hydraulikflüssigkeit mit einem Druck größen 150 bar und im separaten Ölkreislauf ein Wärmetauscher vorgesehen ist.

11. Filterpresse nach Anspruch 10, **dadurch gekennzeichnet, dass** im separaten Ölkreislauf Druckerzeugungsaggregate vorgesehen sind.

12. Filterpresse nach Anspruch 11, **dadurch gekennzeichnet, dass** als Druckerzeugungsaggregate mehrere Hochdruckpumpen hintereinander geschaltet werden.

13. Filterpresse nach einem der Ansprüche 10 bis 12, **dadurch gekennzeichnet, dass** die inneren Oberflächen des Ölkreislaufes gegenüber dem Palmöl oder Palmkernöl resistent ausgeführt sind.

## Claims

1. Process for pressing out palm oil or palm kernel oil in a filter press, **characterized by** palm oil or palm kernel oil being used as hydraulic fluid in this filter press, where the palm oil or palm kernel oil is circulated in a loop and maintained at a pressure greater than approximately 150 bar and a temperature above and at an interval to the melting temperature.

2. Process according to Claim 1, **characterized by** the pressure being approximately 400 to 450 bar.

3. Process according to Claim 1 or 2, **characterized by** the palm oil or palm kernel oil having a temperature between approximately 15°C and approximately 60°C, preferably between approximately 25°C and 50°C.

4. Process according to Claim 3, **characterized by** the palm oil or palm kernel oil having a temperature between approximately 30°C and approximately 45°C, for example approximately 35 to 40°C.

5. Process according to Claim 1 or 2, **characterized by** the palm oil or palm kernel oil having a temperature between approximately 55°C and approximately 70°C at start-up.

6. Process according to one of Claims 1 to 5, **characterized by** the palm oil or palm kernel oil having maximum contamination of 5% by other non-mineral oils.

7. Process according to one of Claims 1 to 5, **characterized by** the palm oil or palm kernel oil having maximum contamination of 0.5% by mineral oils.

8. Process according to one of Claims 1 to 7, **characterized by** the inner surfaces of the oil circuit having a finish that is resistant to palm oil or palm kernel oil.

9. Process according to one of Claims 1 to 8, **characterized by** the palm oil or palm kernel oil being used without any additives.

10. Filter press for pressing out palm oil or palm kernel oil, **characterized by** a separate oil circuit being provided for palm oil or for palm kernel oil as hydraulic fluid with a pressure of more than 150 bar and a heat exchanger being provided in the separate oil circuit.

11. Filter press according to Claim 10, **characterized by** pressure generating units being provided in the separate oil circuit.

12. Filter press according to Claim 11, **characterized by** several high-pressure pumps being arranged one after the other as pressure generating units.

13. Filter press according to one of Claims 10 to 12, **characterized by** the inner surfaces of the oil circuit having a finish that is resistant to palm oil or palm kernel oil.

## Revendications

1. Procédé de pressage d'huile de palme ou d'huile de palmiste dans un filtre presse, **caractérisé en ce que** de l'huile de palme ou de l'huile de palmiste est utilisée comme fluide hydraulique dans ce filtre presse, l'huile de palme ou l'huile de palmiste étant mise en circulation et étant maintenue à une pression dépassant environ 150 bar et à une température dépassant la température de fusion et à une certaine distance de celle-ci.

2. Procédé selon la revendication 1, **caractérisé en ce que** la pression s'élève à entre 400 et 450 bar.

3. Procédé selon la revendication 1 ou 2, **caractérisé en ce que** la température de l'huile de palme ou de l'huile de palmiste s'élève à entre environ 15°C et environ 60°C, de préférence à entre environ 25°C et 50°C.

4. Procédé selon la revendication 3, **caractérisé en ce que** la température de l'huile de palme ou de l'huile de palmiste s'élève à entre environ 30°C et environ 45°C, par exemple environ 35 à 40°C.

5. Procédé selon la revendication 1 ou 2, **caractérisé en ce que** la température de l'huile de palme ou de l'huile de palmiste s'élève à entre environ 55°C et environ 70°C au démarrage.

6. Procédé selon l'une des revendications 1 à 5, **caractérisé en ce que** le taux d'impuretés dans l'huile de palme ou l'huile de palmiste causées par d'autres huiles non-minérales ne dépasse pas 5%.

7. Procédé selon l'une des revendications 1 à 5, **caractérisé en ce que** le taux d'impuretés dans l'huile de palme ou l'huile de palmiste causées par des huiles minérales ne dépasse pas 0,5%.

8. Procédé selon l'une des revendications 1 à 7, **caractérisé en ce que** les surfaces intérieures du circuit de l'huile ont une finition résistante à l'huile de palme ou à l'huile de palmiste.

9. Procédé selon l'une des revendications 1 à 8, **caractérisé en ce que** l'huile de palme ou l'huile de palmiste est utilisée sans aucun additif.

10. Filtre presse de pressage d'huile de palme ou d'huile de palmiste, **caractérisé en ce qu'**un circuit séparé est prévu pour l'huile de palme ou l'huile de palmiste en tant que fluide hydraulique à une pression dépassant 150 bar, et un échangeur de chaleur est prévu dans le circuit d'huile séparé.

11. Filtre presse selon la revendication 10, **caractérisé en ce que** des unités de génération de pression sont disposées dans le circuit d'huile séparé.

12. Filtre presse selon la revendication 11, **caractérisé en ce que** plusieurs pompes haute pression sont branchées en série comme unités de génération de pression.

13. Filtre presse selon l'une des revendications 10 à 12, **caractérisé en ce que** les surfaces intérieures du circuit d'huile ont une finition résistante à l'huile de palme ou à l'huile de palmiste.
